(19) Europäisches Patentamt
European Patent Office
Office européen des brevets

(11) EP 0 735 509 B1

(12) **EUROPEAN PATENT SPECIFICATION**

(45) Date of publication and mention
of the grant of the patent:
**27.01.1999 Bulletin 1999/04**

(51) Int Cl.6: **G06T 7/00**

(21) Application number: **95650009.4**

(22) Date of filing: **31.03.1995**

(54) **Image processing for facial feature extraction**

Bildverarbeitungsverfahren zur Ermittlung von Gesichtsmerkmalen

Traitement d'image en vue de l'extraction de caractéristiques faciales

(84) Designated Contracting States:
**DE GB IE IT**

(43) Date of publication of application:
**02.10.1996 Bulletin 1996/40**

(73) Proprietor: **HITACHI EUROPE LIMITED**
**Maidenhead, Berkshire, SL6 8YA (GB)**

(72) Inventors:
• **Smith, Anthony**
  **Dublin 4 (IE)**
• **Sako, Hiroshi**
  **Booterstown, County Dublin (IE)**
• **Sutherland, Alistair**
  **Dublin 2 (IE)**
• **Abe, Masahiro**
  **Dublin 2 (IE)**

(74) Representative: **O'Connor, Donal Henry et al**
**c/o Cruickshank & Co.,**
**1 Holles Street**
**Dublin 2 (IE)**

(56) References cited:
• **BIOLOGICAL CYBERNETICS, vol. 70, 1993 HEIDELBERG DE, pages 137-144, XP 000453391 L. BOWNS ET AL. 'Facial features and axis of symmetry extracted using natural orientation information'**
• **ELECTRONICS & COMMUNICATIONS IN JAPAN, PART I - COMMUNICATIONS, vol. 76, no. 9, 1993 NEW YORK US, pages 9-20, XP 000449113 YUUKOU HORITA AT AL. 'Region segmentation coding of color images based on uniform HVC Color space'**

**Description**

The invention relates to an image processing method and apparatus and more particularly to reception of a subject facial input, image signal and generation of a feature extraction tracking signal representing facial features of the subject.

In the paper "Realtime Facial Image Recognition in Unconstrained Environment for Interactive Visual Interface" by Hasegawa et al published in ACCV '93 Asian Conference on Computer vision, November 23-25, Osaka, Japan pp. 763-766 a system is outlined in which features such as the eyes and the nose are extracted as edges. The tracking signal may be processed for integration of facial features or for monitoring eye contact. Because feature extraction involves monitoring feature edges, the amount of useful information would appear to be limited. Little technical information is given in the paper to describe how the system operates. However, it is mentioned that RGB colour information is calculated. The use of RGB information generally leads to high complexity in the image processing circuits.

The paper by J.F.S. Yau and N.D. Duffy entitled "A Feature Tracking Method for Motion Parameter Estimation in a Model-Based Coding Application" presented at the Third International Conference on Image Processing and its Applications held at Warick on 18-20th July 1989 and published in IEE Conference Publication No. 307 at pages 531 to 535 describes a method of tracking a face. In this method, there is a first phase which involves tracking the eye, nose and mouth over the image sequence. This is achieved by locating the facial features within the first frame and then tracking them over subsequent frames using block searching and code-book techniques. The result of the first tracking phase is a description of the trajectory of facial feature boxes over the image sequence along the temporal axis. There is then a second phase which involves motion parameter estimation whereby the spatial distribution of the facial feature boxes for each frame are interpreted to provide an estimate of position and orientation. In this way, the dynamics of facial movement are parameterised for application in a three-dimensional model-based image coding scheme.

The output signal represents a facial image having feature extraction information. It appears that this prior method is intolerant to occlusion as once tracking of a feature is lost it has difficulty re-locating it. Further, processing must of necessity be complex as the interrelationship of boxes is analysed on a frame-by-frame basis.

Japanese Patent Specification No. JP 02141880 (Graphic Communication Technologies) describes a system whereby an image signal is divided into a grid of regions and there is analysis of each region separately. The evaluation is performed on a single image and does not involve processing from frame to frame and the purpose of the system is to discriminate a face in an image.

Japanese Patent Specification No. JP 63142986 (NEC) describes a system which detects the facial area of an image according to detection of mouth movement. A suggested application for the system is that of obtaining the image of a face and overlaying it upon a picture of clean clothing. Accordingly, there is limited feature extraction in these systems, and also therefore little versatility.

In general, it could be said that the prior art shows limited feature extraction.

The invention is directed towards providing a method and apparatus for feature extraction which involves less complexity than heretobefore.

Another object is to provide a tracking signal which is of more benefit than heretobefore for down-stream processing with a wider range of applications.

The invention is characterised in that :-

the input image signal is in H,S,V format;

a facial area location signal is generated by passing at least part of the input image signal through a band pass filter and analysing the output of the filter;

a mouth location signal is generated by passing at least part of the input image signal through a band pass filter and analysing the output of he filter within the facial pixel area according to the facial area location signal;

eye location signals are generated by processing at least part of the input image signal within the facial pixel area according to the facial area location signal; and

the facial area location, mouth location and eye location signals are outputted as output tracking signals.

In one embodiment, only two of the H,S,V input image components are used for generation of the facial area location signal.

Preferably, the H and S components are passed through the band pass filter for generation of the facial area location signal.

In one embodiment, only two of the H,S,V input image components are used for generation of the mouth location signal.

Preferably, the S and V components are passed through the band pass filter for generation of the mouth area location signal.

In one embodiment, the band pass filter output signals are analysed by mapping the output data over the pixel area and generating a projection in a mapping axis and analysing said projection, and preferably two projections are generated, one for each axis in a two-dimensional pixel area plane.

In another embodiment, each band pass filter comprises a look-up table containing filter indicators which are generated off-line.

Ideally, the step of analysing the filter output signals comprises the further steps of determining maximum limits in the pixel area for a feature and generating a bounding box according to said limits.

In a further embodiment, the image processing for generation of the eye area location signals comprises the steps of correlation with template, and preferably the image signal is normalised before correlation.

In another embodiment, the V component only of the input image signal is used for generation of the eye location signals.

In a further embodiment, the tracking signals which are generated are post-processed to generate a facial characteristic signal representing both location and positional characteristic data, said signal being generated by passing the tracking signals through logic devices.

According to another aspect, the invention provides an image processing apparatus comprising :-

means for receiving an input image signal in H,S,V format;

a facial area band pass filter;

means for passing at least part of the input image signal through the facial area band pass filter and analysing the output of the filter to generate a facial area location signal;

a mouth location band pass filter;

means for passing at least part of the input image signal through the mouth location band pass filter and for analysing the output of the filter within the face pixel area according to the facial area location signal;

processing means for processing at least part of the input image signal within the facial pixel area according to the facial area location signal to generate eye location signals; and

means for outputting said facial area location, mouth location, and eye location signals as output tracking signals.

Preferably, only the H and S components of the input image signal are passed through the facial area band pass filter.

In one embodiment, only the S and V components of the input image signal are passed through the mouth location band pass filter.

In a further embodiment, the apparatus further comprises post-processing logic devices comprising means for receiving the tracking signals and generating a facial characteristic signal representing both location and positional characteristic data.

The invention will be more clearly understood from the following description of some embodiments thereof, given by way of example only with reference to the accompanying drawings, in which :-

Fig. 1 is an overview diagram showing an image processing apparatus for generation of a feature extraction tracking signal;

Figs. 2(a) to 2(p) are detailed diagrams showing various devices making up the apparatus of Fig. 1 in more detail; and

Figs. 3(a) and 3(b) are detailed diagrams showing construction of a post-processor of the apparatus of Fig. 1.

Referring to the drawings, there is shown an image processing apparatus comprising a facial part detection unit 31 and a post-processor 50. The facial part detection unit 31 takes an input video signal from a camera, captures images and detects the facial parts such as mouth, eyes, eye pupils, eyebrows etc. by colour region monitoring and determines their positions within that image. The output of the facial part detection unit 31 is a feature extraction tracking signal having a set of positional parameters for the facial parts. These parameters are :-

| Mlx, Mly, Mhx, Mhy | Specify the Mouth Box |
|---|---|
| Slx, Sly, Shx, Shy | Specify the Face Box |
| LEx, LEy | Specify the Left Eye Position |
| REx, REy | Specify the Right Eye Position |
| RPx, RPy | Specify the Right Pupil Position |
| RBx, RBy | Specify the Right Eyebrow Position |
| LPx, LPy | Specify the Left Pupil Position |
| LBx, LBy | Specify the Left Eyebrow Position |

The manner in which these parameters are generated is described in more detail below. It will be appreciated that such tracking signals are very comprehensive and would be of benefit in a wide range of applications such as sign language communication and data capture.

The post processor 50 uses the positional parameters to generate a set of facial characteristics so that the facial feature position and orientation can be expressed. These characteristics are :-

Mouth Openness in X Orientation
Mouth Openness in Y Orientation
Face Rotation in X Orientation
Face Rotation in Y Orientation
Face Rotation in Z Orientation
Eye Direction in Horizontal Position
Eye Direction in Vertical Position
Eyebrow Vertical Position

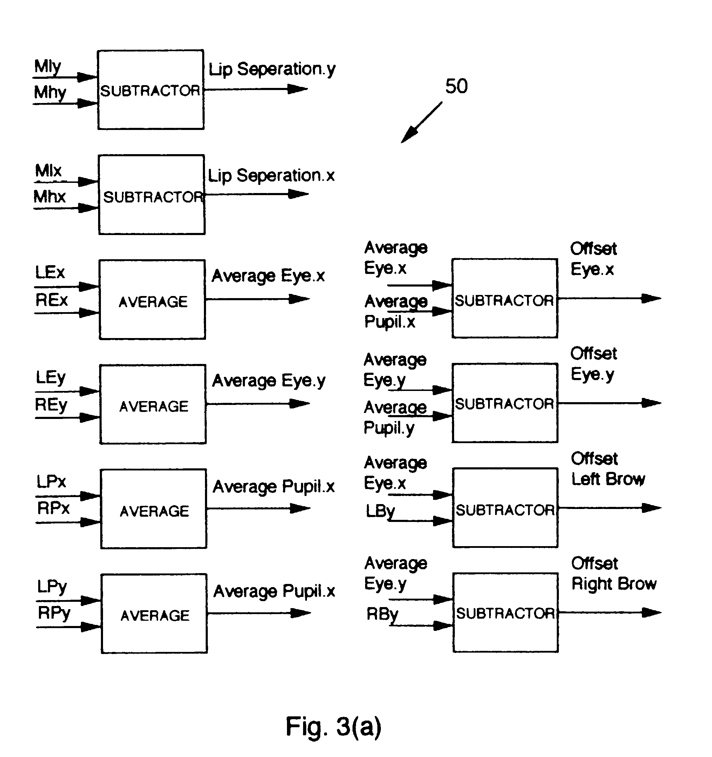

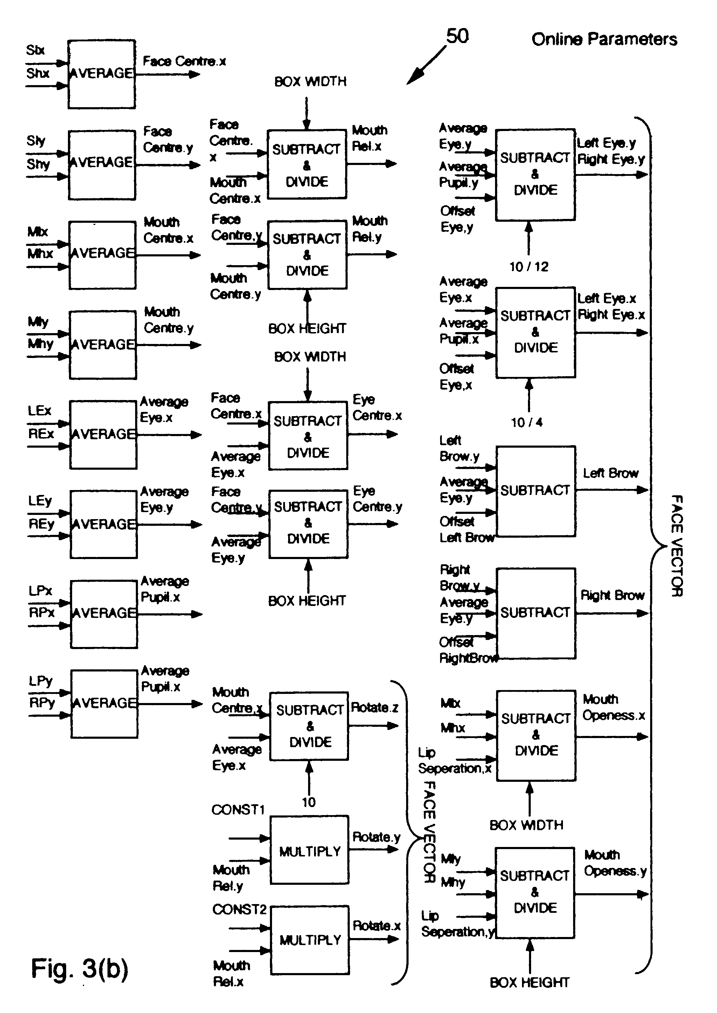

It would be possible to produce other information such as distance by suitably processing the tracking signal. Construction of the post-processor 50 is shown in Figs. 3(a) and 3(b) whereby various average, subtractor, subtract and divide, and multiply circuits are used.

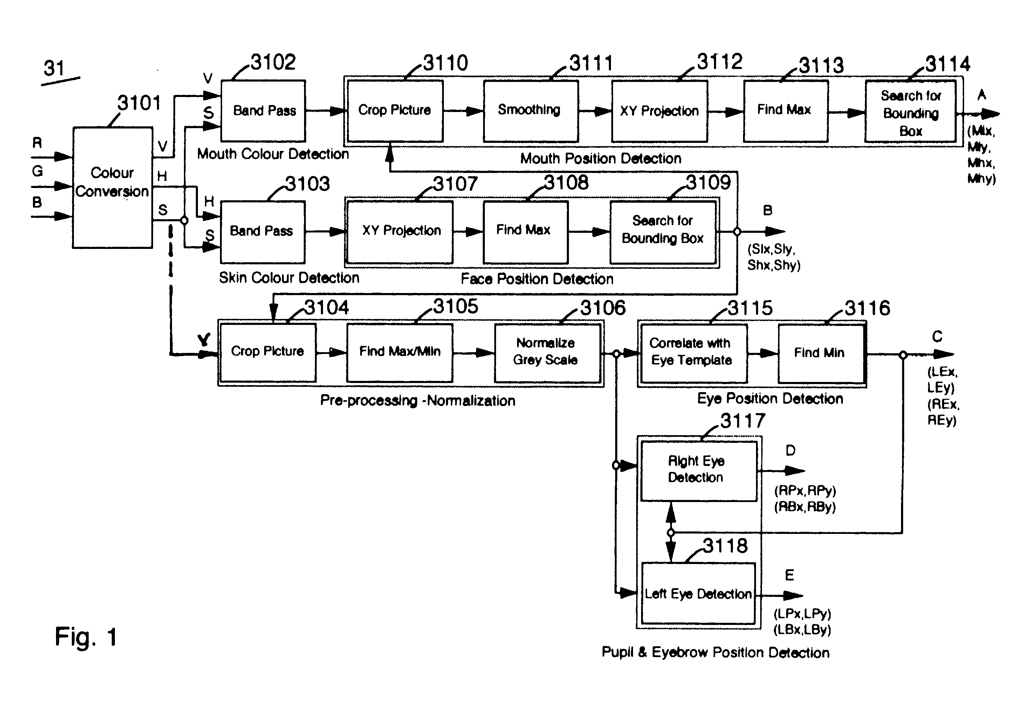

Referring now to Fig. 1, the facial part detection unit 31 is now described in more detail. The function of the unit 31 is to provide a feature extraction tracking signal having feature extraction parameter values which are used by the post processor 50 to generate a face vector. The tracking signal may alternatively be independently outputted.

The facial part detection unit 31 provides five different feature extraction tracking signals, namely, A, B, C, D and E. The A output represents the mouth coordinates and is provided by the following devices :-

a band pass device 3102;

a crop picture device 3110;

a smoothing device 3111;

an XY projection device 3112;

a find max device 3113; and

a bounding box search device 3114.

The output B specifies the face box and is provided by the following devices:-

a band pass device 3103;

an XY projection device 3107;

a find max device 3108; and

a bounding box search device 3109.

Crop picture, find max/min and normalise grey scale devices 3104, 3105 and 3106 respectively provide pre-processing normalisation for the remaining outputs, C,D, and E. The output C represents the left and right eye positions and is provided by a device 3115 which correlates with an eye template, and a find min device 3116.

The output D specifies the right pupil and eyebrow positions and is provided by a right eye detection device 3117. Finally, the output E represents the left pupil and eyebrow positions and is generated by a left eye detection device 3118.

The converter 3101 takes as input a video signal (R, G, B, Composite, etc.) and outputs digital values of the colour represented in the HSV colour domain. The output is passed to the band pass devices 3102 and 3103 and the pre-processing normalisation devices 3104 to 3106. The band pass device 3102 detects mouth colour and the band pass device 3103 detects skin colour. The skin colour detection signal passes to the face position detection devices 3107, 3108 and 3109 which produce a box which gives the position of the face in the image. The facial box coordinates are passed to mouth position detection devices 3110-3114 which search the facial box region to determine the position of the mouth in the image. It is of course implied that the mouth position is to be found within the facial box.

The pre-processing-normalisation devices 3104 to 3106 normalise the pixels in the facial box before outputting this image to eye position devices 3115 and 3116 and the pupil and eyebrow position detection devices 3117 and 3118. The purpose of this is to increase the accuracy of the correlation results in the eye position detection. The eye position detection devices 3115 and 3116 correlate the facial area of the normalised image with pre-stored eye templates to determine the location of the eyes, and produce two X,Y coordinates which specify the eye locations within the image. These eye position coordinates are passed to the pupil and eyebrow position detection devices 3117 and 3118 which use these coordinates to obtain areas around each eye which are then post-processed to obtain the pupil and eyebrow positions for each eye. An important aspect of operation of the unit 31 is operation of the band pass devices to filter the HV data and only pass through data which is shown to be present in a colour template of the skin and face.

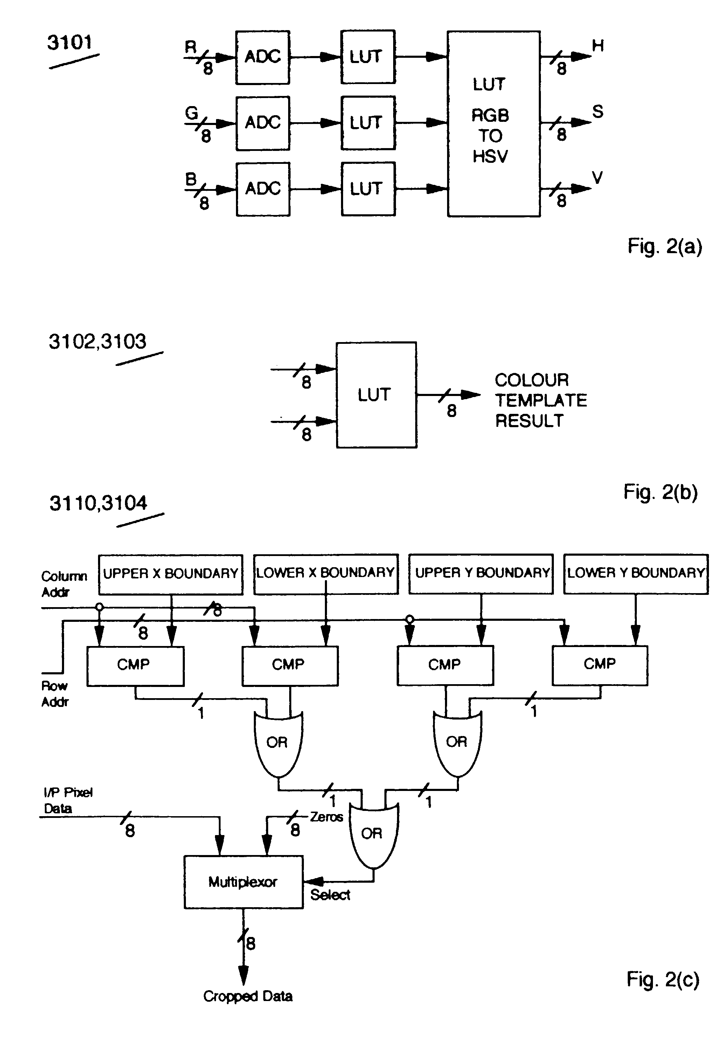

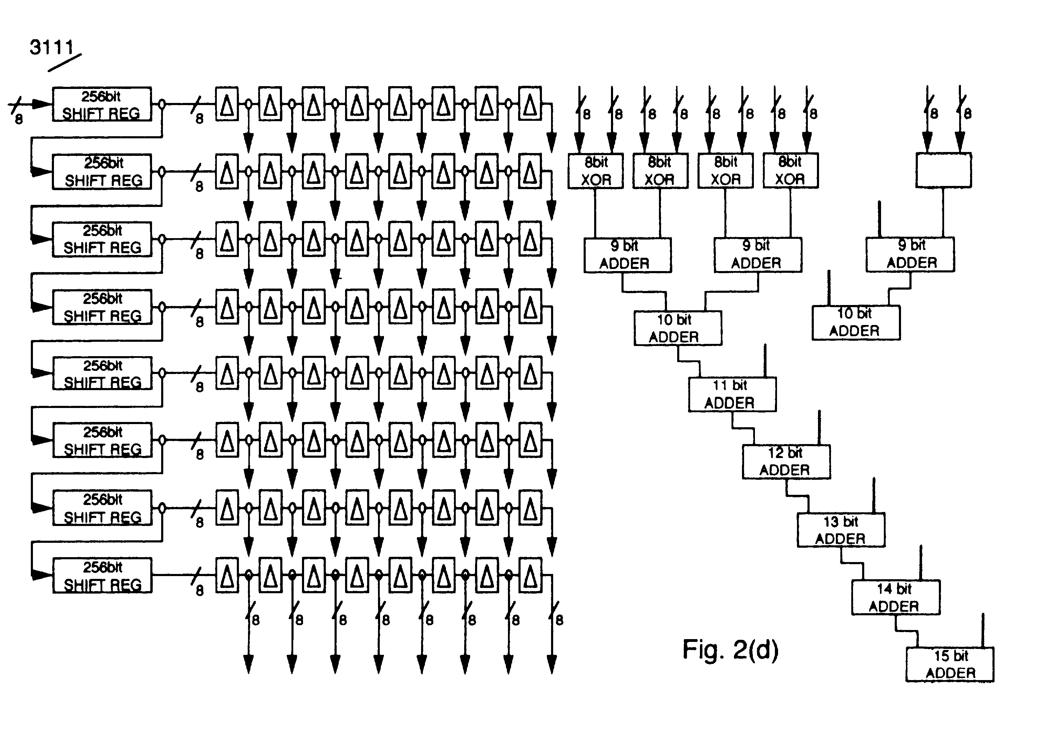

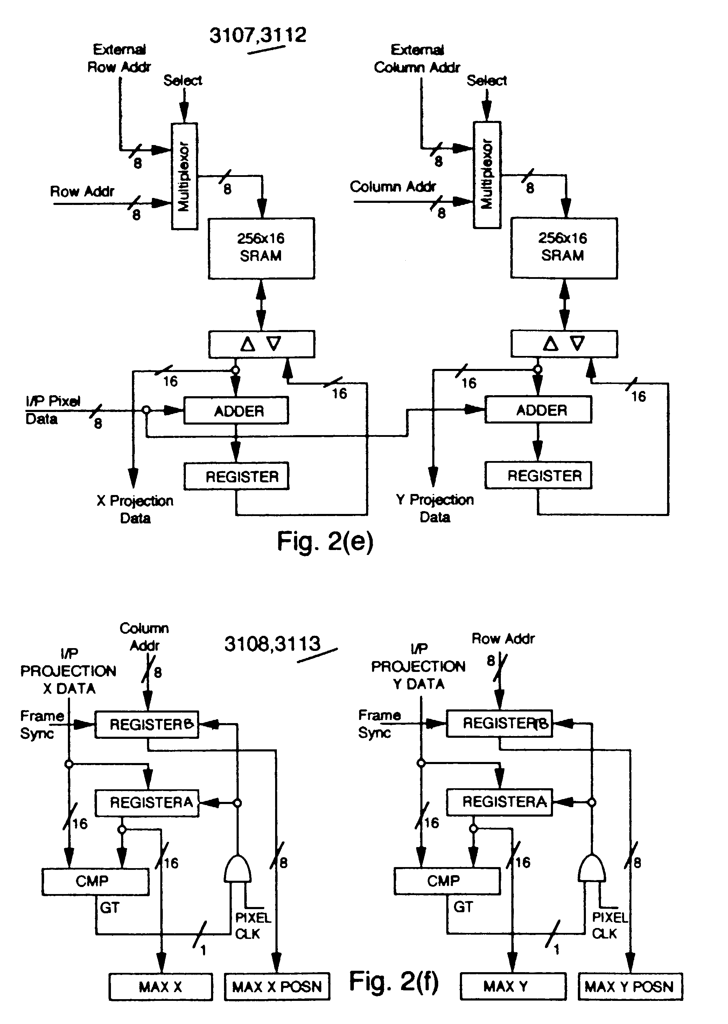

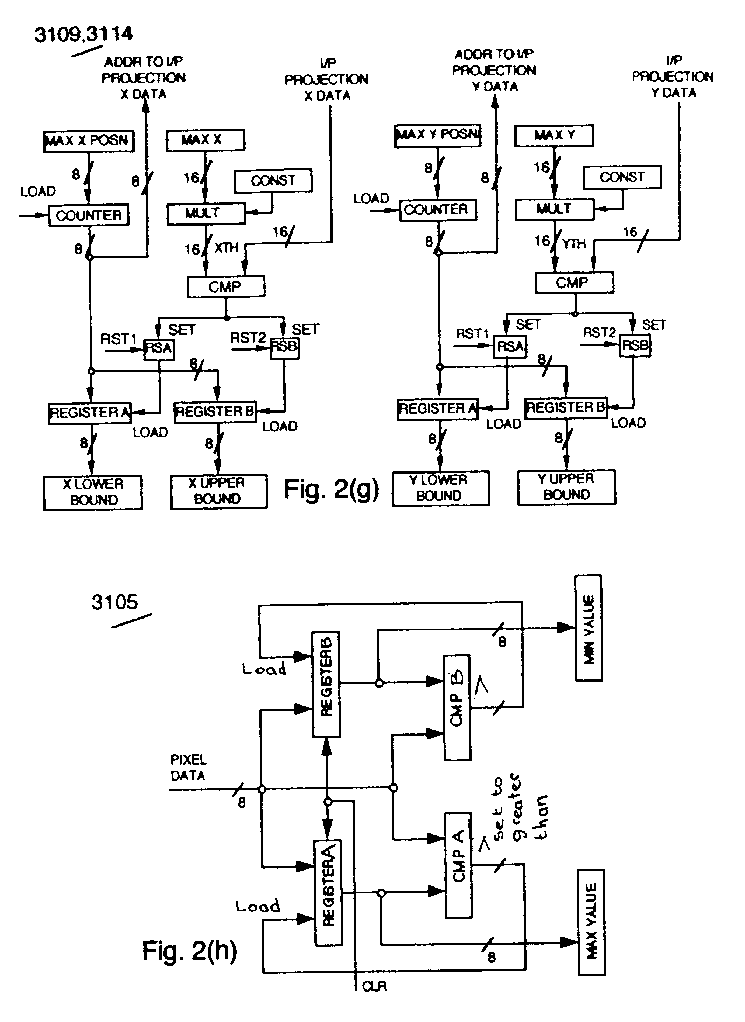

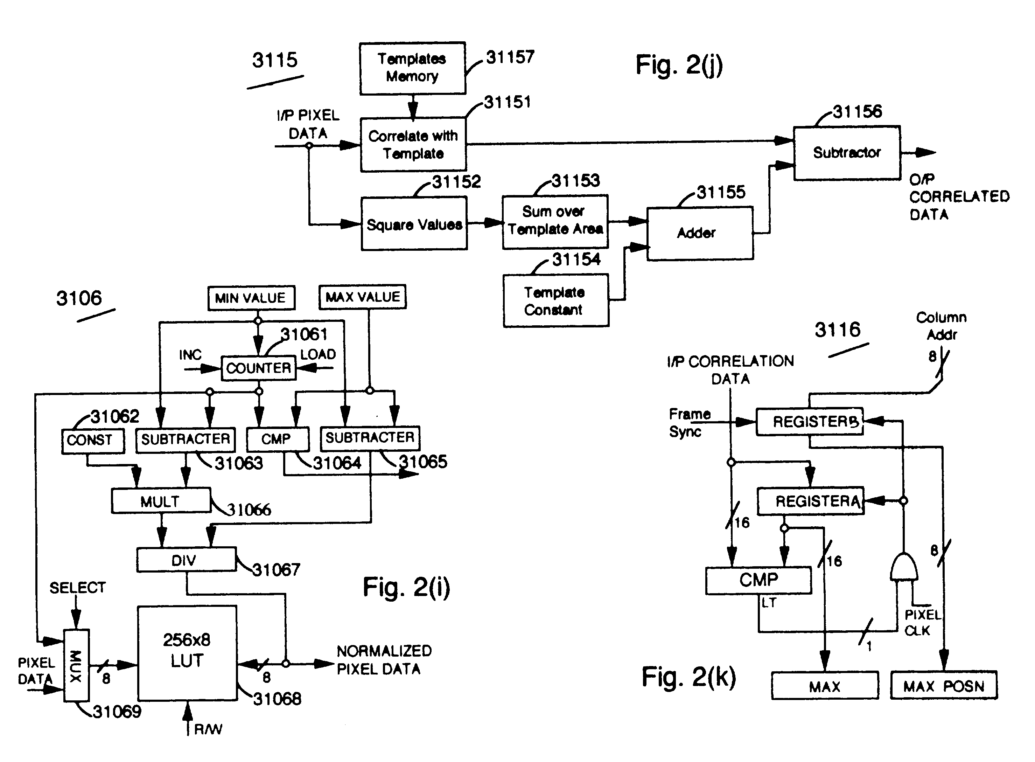

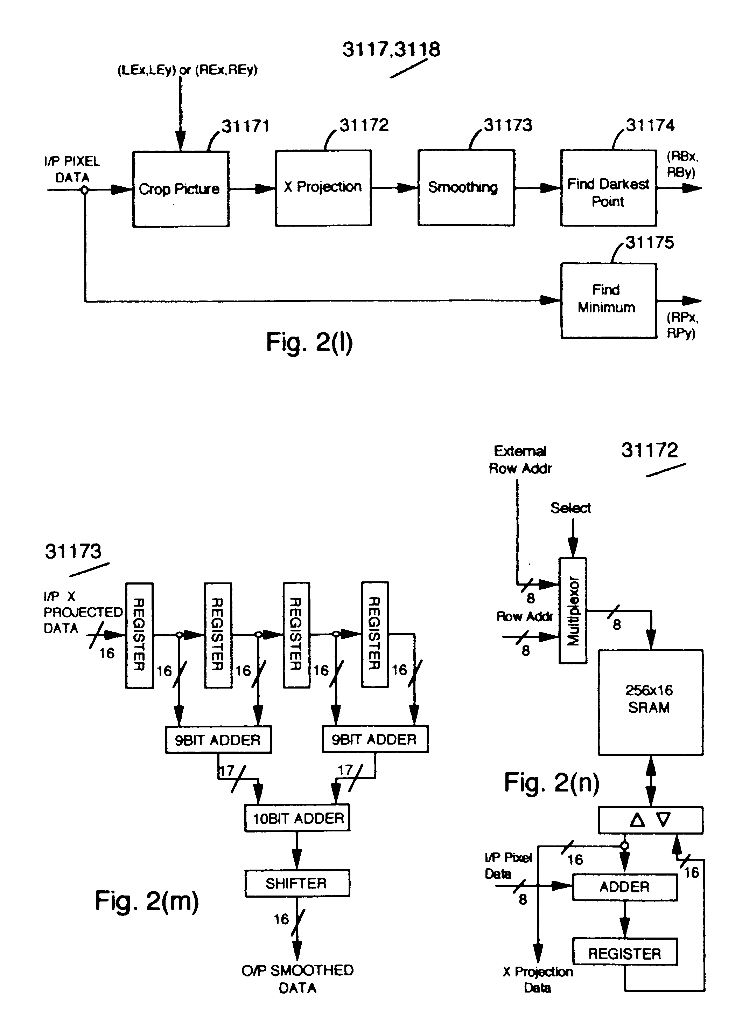

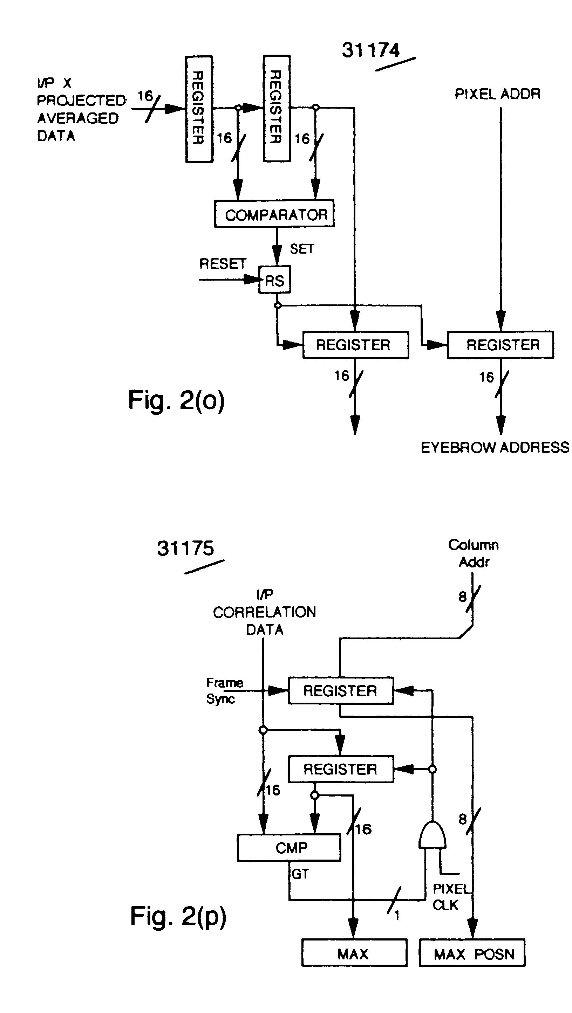

Referring now to the various diagrams of Fig. 2, the devices 3101 to 3118 are described in more detail.

As shown in Fig. 2(a), the colour conversion device 3101 comprises an ADC, and a look-up table for each of the R, G and B components, all connected to an RGB to HSV look-up table. There are several different implementations of this conversion which will be known to those people skilled in the art.

The input stage has an arrangement in which the S and V components are directed to the mouth detection filter 3102 and the H and S components are directed to the face detection filter 3103. Thus, each of these series of circuits must only process two components and may therefore be quite simple. It has been found that a combination of H (hue) which is essentially wavelength data together with S (saturation) is particularly effective for detecting skin. It has also been found that the S and V (value) components are particularly effective for distinguishing the mouth area within the already identified facial (skin) area.

The purpose of the band pass device 3102 is to filter the S,V data and only pass through data which has been shown to be present in a colour template of the mouth. The device 3102 is shown in circuit form in Fig. 2(b) and is implemented as a look-up table (LUT). This may be an SRAM which is programmed off-line, or alternatively a PROM which is programmed in production. It has the same construction as the filter 3103 for facial area detection.

The feature of receiving two of the H, S, and V components for each of the mouth and face series of processing circuits is important. This avoids the need for the very large memories which are commonly required for the prior R, G, B systems and, further, avoids the need for backprojection in colour histogram matching techniques. Instead, band pass filters 3102 and 3103 are used. The two components (S,V for mouth area, HS for face) form an address for the look-up table, which stores a value for each address. The table values are generated off-line according to reference mouth and face patterns. At its simplest, the values may be at the bit-level giving YES or NO indications for the particular S,V or H,S combinations. The XY projection devices 3112 and 3107 perform the next fundamental processing steps by mapping the retrieved table values over the pixel area and generating XY projections. Once this has been done, the next steps of finding maximum limits and searching for the bounding box can be easily implemented.

To put it simply, the band pass filtering and the XY projection over the pixel area are the fundamental steps and can be implemented by simple circuits. Further, the down-stream steps are very simple to implement.

The purpose of the crop picture device 3110 is to limit the image processing tasks to only the area determined by the face position detection section as it receives the facial area information from the device 3109. There are two reasons for doing this. Firstly, as only a fraction of the image is processed this increases the number of frames which can be processed in a given time period. Secondly, it allows local operations such as normalization to be done on the facial area alone, unaffected by external influences such as bright light sources in other parts of the picture and random background noise. This increases accuracy in such tasks as eye-tracking.

The purpose of the smoothing device 3111 shown in Fig. 2(d) is to aid mouth position detection in proceeding image processing by the devices 3112-3114. It will be noted that the face position detection stage (3107-3109) and the mouth position detection stage (3110-3114) share several common tasks, namely XY Projection, find max and search for bounding box. However, the mouth position detection stage includes two extra tasks which are not shown in the face position detection, namely crop picture and smoothing. The purpose of the crop picture device 3110 is explained above. The reason that smoothing is not present in the face position detection derives from the face that the task being undertaken is facial parts identification and position location. This implies that the face will occupy a large area in the input image. In any image processing task there is a level of background noise due to a variety of factors, for example, inaccuracies in the conversion of analogue data to digital data, stroboscopic effects from foreign lighting sources, light deflation from glasses, etc.. These add noise to the processed image. In the detection of the facial area, since the skin will cover a large percentage of the input image, there is a considerable number of pixels which will be identified as belonging to the skin. Therefore, the background noise will have little or no effect on the results obtained from the face position detection. However, the mouth occupies a much smaller area, and therefore the background noise will have a much greater effect on obtaining correct results from the mouth position detection stage. The probability that a mouth pixel is mistaken for a skin pixel and vice-versa is high and affects mouth area detection. However, in the case of face position detection the fact that a mouth pixel is mistaken as a skin pixel actually helps in the location of the facial area, since the mouth area lies within the face area. However, the opposite applies for the mouth position detection. To help overcome this problem the image is smoothed before performing further image processing steps. It is assumed that the background noise is random in nature and will occur randomly over the image, whereas the mouth pixel recognition is highly concentrated in a single area. By averaging over an area, the effects of the background noise an be reduced whilst enhancing the areas where recognition is highly concentrated. The principle behind the device 3111 is to average all pixels within an 8 x 8 area, and place the result at the central pixel point. The operation of this circuit and its underlying principles will be understood to those skilled in the art. The resulting image is a smoothed representation of the input image.

Further image processing tasks are performed on the smoothed image by the devices 3112-3114, namely XY Projection, find max and search for bounding box. These devices function in the same manner as the devices 3107 to 3109 in the face detection stage which are described in detail below. The output from the device 3114 is a signal indicating a box which defines an area in the input image where the mouth is located.

The purpose of the device 3107 shown in Fig. 2(e) is to perform an XY projection on the image which is outputted from the device 3103 to effectively map the filter output over the pixel area. The device 3107 can be divided into two sections which operate in the same fashion, the left hand side which evaluates the X projected data, and the right hand side which evaluates the Y projected data. The circuit comprises a 256 x 16 bit SRAM which is used to store the X projected data, a multiplexer to arbitrate access to the databus of the SRAM, a multiplexer to arbitrate access to the address bus of the SRAM, an adder to perform additions on the projected data, and a register to act as an intermediate data store. The circuit functions in the following manner. It is assumed that the SRAM can have all bits set to zero, i. e. the SRAM can be cleared, at the beginning of every XY projection, however, this function is not shown in the diagram. It is also assumed that the maximum image size is 256x256 pixels, however, to those skilled in the art, it is possible to adapt the circuits to handle large images. Pixel data is inputted into the circuit through I/P pixel data, with the address of each pixel being inputted through Row Addr and Column Addr. It is assumed that the Select line is set so that Row Addr signals impinge upon the SRAM, and that the bi-directional buffer is configured to allow data to be read from the SRAM into the ADDER. The Row Addr reads the present X projection value from the SRAM into the ADDER circuit. The ADDER adds together the data from the SRAM and that of the I/P PIXEL DATA and puts the result into the REGISTER. The bi-directional buffer is then configured to write data from the REGISTER into the SRAM so that the new result is stored. The next pixel value is then inputted into the circuit with the new Row Addr signal being used to select the appropriate X storage location. The process is repeated until all pixels in the image have been processed. By changing the select switch to allow the External Row Addr to impinge upon the SRAM it is possible to read out the final X projection values. The operation of the Y projection is carried out in parallel to the X projection.

The purpose of the device 3108 shown in Fig. 2(f) is to find the maximum value in the X and Y projection data so that an X and Y location which lies within the facial area can be found. The device 3108 can be divided into two sections, which both process in parallel and operate in the same fashion. The basic principle of the circuit is that each final projection value is compared using a comparator CMP with a maximum value stored in REGISTER A. If the projection data value is greater than the value in REGISTER A then this new value is stored in REGISTER A, whilst simultaneously the column address is stored in REGISTER B. Data from the XY projection device 3107 is read out serially, and impinges upon REGISTER A and CMP, whilst the address is of the Projection value impinge upon REGISTER B. The output of REGISTER A is also outputted to CMP where the contents of REGISTER A and the Projection X value are compared. If the result indicates that the projected value is greater than the contents of REGISTER A then a signal is generated in conjunction with the PIXEL CLK which loads the new data value into REGISTER A, whilst simultaneously loading the address of the pixel into REGISTER B. This process is repeated for X(Y) projected values. The values remaining in REGISTER A and B indicate the maximum projected value and the location at which it occurred.

The purpose of the device 3109 shown in Fig. 2(g) is to determine the limits for a bounding box which will enclose the skin area. This area will be used in subsequent image processing tasks. The circuit can be divided into two identical sections, the left hand side relating to finding the boundaries, the right hand side to the Y boundaries. This circuit uses information from the device 3108, namely MAX X POSN, MAX X, MAX Y POSN and MAX Y. The operation of the circuit is to derive a threshold value, $X^{TH}$, for the X data using MAX X, and a threshold value, $Y^{TH}$, for the Y data using MAX Y. This is achieved by multiplying the MAX X(Y) by a constant which is less than one. The constant multipliers may be different for the X and Y data. The next stage is to determine the lower boundary. By starting at the MAX X POSN and repeatedly decrementing its position whilst checking if the X Projection data at this new location is less than the threshold value, $X^{TH}$, the point at which the X projected data goes beneath the threshold can be found. This is the X LOWER BOUND. By starting at the MAX X POSN and repeatedly incrementing its position whilst checking if the X Projection data at this new location is less than the threshold value, $X^{TH}$, the point at which the X projected data goes beneath the threshold can be found. This is the X UPPER BOUND. The calculation of the Y boundaries follows a similar fashion. The circuit operation is as follows. The MAX X data from the device 3108 is multiplied by CONST in MULT and the result, which is $X^{TH}$ is passed to CMP, where all data from I/P PROJECTION X DATA will be compared to $X^{TH}$. The value MAX X POSN, also from the device 3108, is loaded in counter using the LOAD signal, originating from device 50. The device 50 also provides control signals RST1 and RST2 which reset the RSA and RSB flip flops into the RESET state. This will provide the address to look up the final X Projection values in device 3107. The multiplexer in the device 3107 is set so that the address from the address from the External Row Addr impinges upon the SRAM. In this way, the X Projection data values can be read from the SRAM and into the divide 3109. Data from the device 3107 arrives at I/P PROJECTION X DATA where it is compared against the $X^{TH}$ value. If the result of the comparator, CMP, shows that the I/P PROJECTION X DATA is less than $X^{TH}$, then a signal is generated which causes the RS flip flops RSA and RSB to be put in the SET position. The address in the COUNTER is decremented until the comparator, CMP, shows that the threshold has been exceeded, at which point both flip flop RSA are placed in the SET state. The signal from the flip flops is used to load REGISTER A with the current COUNTER value which indicates the X LOWER BOUND. The COUNTER is then loaded with the MAX X POSN once again using the LOAD signal. This time, instead of decrementing the COUNTER, the COUNTER is incremented until the data once again exceeds the threshold value, $X^{TH}$. This time the RSB flip flop is placed in the SET state and the output of RSB flip flop is used to load REGISTER B with the value of COUNTER, which this time indicates the X UPPER BOUND. The operation for the Y projected values is the same. At the end of this process, the flip flops RSA and RSB are reset using the control signals RST1 and RST2 from a control logic unit, not shown, and the process is repeated for the next frame.

At this stage the bounding box for the facial area has been discovered and a preliminary check can be carried out. If the area of the box is found to be extremely small, of the order of less than 20 pixels, then it can be assumed that there is no face within the image and the proceeding image processing tasks of finding the mouth and eyes can be abandoned.

The pre-processing normalisation section uses the devices 3104-3106. The purpose of the pre-processing normalisation section is to normalise the image before performing correlation to increase the accuracy of the results. This section does not perform image processing on colour information, but on a grey scale image. The V video signal of the HSV video standard is a grey scale representation of the input image.

The purpose of the crop device 3104 shown in Fig. 2(c) is to limit the image processing tasks to only the area determined by the face position detection section and not the whole image. The reasons for doing this are explained above.

The find max/min device 3105 is shown in circuit form in Fig. 2(h). The purpose of this device is to find the maximum and minimum pixel values within the image. This information is to be used in the proceeding image processing stage. The device 3105 is comprised of two registers, REGISTER A and REGISTER B, and two comparators, CMP A and CMP B, REGISTER A and CMP A are used to find the MAX VALUE, whereas REGISTER B and CMP B are used to find the MIN VALUE. The pixel data from the input image is inputted serially via the PIXEL DATA input. The data impinges upon both registers and both comparators. REGISTER A is used as a temporary storage area for the maximum value, MAX VALUE, whereas REGISTER B is used as a temporary storage for the minimum value, MIN VALUE. At the beginning of each frame REGISTER A must be set to 0 and REGISTER B must be set to 255 by a control unit which transmits a control signal CLR. The output of REGISTER A is input to the CMP A where it is compared to the input data. If the result from the comparator CMP A shows that the input data is greater than the data stored in REGISTER A then the comparator generators a LOAD signal which loads the input pixel data into REGISTER A. The operation for minimum value uses the same principle with the comparator generating a load signal when the result from the comparator CMP B shows that the input data is less than the data stored in REGISTER B. After all pixels in the input image have been processed through the circuit the maximum value resides in MAX VALUE, and the minimum value resides in MIN VALUE. Before the next input image can be processed both registers must be initialised to their respective values.

The normalise grey scale device 3106 is shown in circuit form in Fig. 2(i). The purpose of this stage is to translate the input image in such as way that it uses the full range of possible values, namely 0 to 255. The device 3105 processed the image and found the maximum values. In an 8 bit grey scale representation the minimum value possible is 0, and the maximum value possible is 255. However, results from the device 3105 will indicate that from frame to frame the maximum and minimum values found will not be the maximum and minimum possible. Therefore, it is advantageous that a method be devised that changes the input image so that it fits the full range of values. The simplest method, as shown in Fig. 2(i) is that of a look-up table, 31068, which for an 8 bit input and 8 bit output requires a 256x8 bit memory. This look-up table must be programmed frame by frame, as the maximum and minimum values will change frame by frame. The algorithm for programming the look-up table is as follows :-

$$255 \leq x < Max \qquad Coeff(x) = 255$$

$$Max \leq x \leq Min \qquad Coeff(x) = (int) (255 * (x - Min)/(Max - Min)$$

$$Min < x \leq 0 \qquad Coeff(x) = 0$$

where the values Max and Min refer to the values of MAX VALUE and MIN VALUE calculated by the device 3105. Max and Min must be between the values of 0 and 255, and Max > Min. Fig. 2(i) shows that the circuit of the device 3106 is made up of devices 31061-31069. The circuit has two modes of operation. The first where the coefficients of the look-up table are calculated and the other where these coefficients are to convert the input image into the normalized output image. The parts 31061 - 31067 are involved with the calculation of the coefficients which are stored in the SRAM 31068. The data is transformed by allowing the PIXEL DATA to impinge upon the SRAM as the address by the control unit setting the SELECT control signal to the correct state. At the start of each frame all locations in the LUT are set to zero and the MIN VALUE is loaded into a counter, indicated as the part 31061. The MIN VALUE along with MAX VALUE are obtained from the device 3105. The counter is loaded using a LOAD control signal from the control logic unit 50, not shown. The output of the counter is inputted to a comparator CMP, which compares the counter value with the MAX VALUE. If the value of the counter is greater than MAX VALUE then this indicates that all coefficients have been loaded into look-up table and that the normalization process can start. The comparator CMP outputs a control signal named FINISHED. The coefficient calculation can be divided into three steps. In the first step two calculations occur in parallel, namely,

| | |
|---|---|
| (a) MIN VALUE - x | where x is the present counter value |
| (b) MAX VALUE - MIN VALUE | |
| then, | |
| (c) CONST x (Result of 1) | using part 31066 |
| then, | |
| (d) (Result of 3)/(Result of 2) | using part 31067 |

The value of CONST is set to 255. The SELECT switch of the multiplexer MUX is set to allow the output of the counter to impinge upon the address bus of the SRAM. By setting the R/W line to the SRAM to write the results from the division part 31067 are written into the SRAM at the location specified by the counter 31061. The counter is then incremented and the process repeated until the comparator CMP, indicates that all coefficients have been calculated and stored in the SRAM. At this point the look-up table to normalise the input image. The SELECT signal is switched to allow the PIXEL DATA to impinge upon the address bus of the SRAM and the R/W control signal is switched to read. The input image is then presented to the SRAM where it is transformed by the look-up table and outputted to the NORMALIZED PIXEL DATA stage. When all pixels have been transformed the counter is again loaded with MIN VALUE, all LUT locations are set to zero, and the process is repeated.

The output of the pre-processing-normalisation section is passed to two further sections, namely the eye position detection stage which finds the eye positions, and the pupil and eyebrow position detection stage which finds the eye pupil and eyebrow positions.

The eye position detection stage has two devices, the correlate with eye template device 3115 and the find max device 3116. The eye position detection is processed twice, once with templates for the left eye, and once with the templates for the right eye.

The correlate with eye template device 3115 is shown in circuit form in Fig. 2(j). The purpose of the device 3115 is to correlate the input image against several pre-stored templates of right and left eye images. The result closest to zero from the right eye correlation indicates the position of the right eye, and the result closest to zero from the left eye correlation indicates the position of the left eye. The correlator circuit comprises a circuit which implements the following mathematical function in integer arithmetic, using only 4 bits of accuracy.

$$\overline{P(x,y)} = \sum_{i=-8}^{i=7} \sum_{j=-8}^{j=7} (P(x+i,y+j) - T(i,j))^2 \qquad \text{Eqn. (1)}$$

where P is the input image, T is the template image, x and y are positional indicators within the input image. This equation is computed for each pixel in the output image.

The algorithm computes the square of all differences between pixels in the input image and the template image. In the case that the input image and the template image are identical the result is zero, the accuracy can be improved by adding more bits, however, this leads to a more complex hardware implementation.

Equation (1) can be simplified so show the basic image processing steps which are needed to implement this equation.

$$\overline{P(x,y)} = \sum_{i=-8}^{i=7} \sum_{j=-8}^{j=7} (P(x+i,y+j)^2 + T(i,j)^2 - P(x+i,y+j)T(i,j))$$

$$\text{Eqn. (2)}$$

wherein $T(i,j)^2$ is a constant, $P(i,j)^2$ is the sum of all pixels squared in the input image, and $P(i,j)T(i,j)$ is the multiplication and summation of all pixels in the input image with the corresponding pixel in the template image.

It can be clearly seen that the algorithm can be divided into several steps, some of which can be executed in parallel.

(1) Compute $P(i,j)^2$m,
(2) Compute $P(i,j)T(i,j)$,
(3) Add $T(i,j)^2$ to (2), $T(i,j)2$ is a constant can so can be calculated off-line
(4) Subtract (2) from (3)

This reduces the calculation to four basic steps.

The device 3115 has parts 31151-31156. The parts 31511 and 31153 are 16 x 16 8 bit correlators, part 31151 performing the $P(i,j)T(i,j)$ and part 31153 performing 31153 performing the $P(i,j)^2$. The part 31152 is an 256 x 8 SRAM which is used as a lookup table to convert the input image pixel values to their squared values before correlation. This is required so that numerical accuracy is maintained throughout the correlation process.

The results from the correlation are inputted to the find min device 3116 where the minimum value and the position of the minimum value are found. A circuit of the device 3116 is shown in Fig. 2(k). It can be seen from the diagram that the device 3116 is similar to the device 3108 and operation of both circuits is identical.

It is envisaged that the eye position detection stage can be expanded so that multiple eye templates can be correlated and the best correlation value found. The implementation of this type of system will be clear to those skilled in the art.

The final output from the eye position detection system are two pixel locations, (LEx,LEy) and (REx,REy), which define the location of left and right eye in the input image.

The devices 3117 and 3118 (shown in Fig. 2(1)), for right eye detection and left eye detection, make up the pupil and eyebrow position detection stage. The purpose of the pupil and eyebrow position detection stage is to use the eye coordinates, (LEx,LEy) and (REx,REy), obtained from the device 3116, together with the normalized image from the device 3106, to find the positions of the eye pupil and eyebrow for both the left and right eyes.

The device 3117 for right eye detection is shown in circuit form in Fig. 2(l). The device 3117 is comprised of parts 31171-31175. The first part 31171, known as crop picture, is used to obtain a region of interest, using the right eye coordinates (REx,REy) as the central pixel. This sub-image is then outputted to the part 31172, known as X Projection which performs an X projection on the sub-image. The circuit to implement the part 31172 is shown in Fig. 2(n). The functioning of the part 31172 is identical to that of the device 3107.

The data from the device 31172 is passed to the device 31173 for smoothing where the X projection data is smoothed from the uppermost row of sub-image to the lowest. A circuit which implements the device 31173 is shown in Fig. 2(m). The principle behind this circuit is that the serial input stream is averaged over four pixel values and the output is the averaged pixel stream. In order to average, the pixels are stored in REGISTERs with the outputs being fed to adders. The result from the adders is then outputted to a SHIFTER, which shifts the result right by two places, corresponding to a divide by 4. The next pixel is then inputted to the circuit and stored in the first REGISTER. In parallel the previous stored data is shifted along the REGISTER chain. The new average is then computed and outputted. This process is repeated until all X projected data has been smoothed.

The averaged X projected data from the part 31173 is then passed to the device 31174. The purpose of this device is to search the averaged X projected data from the uppermost row value to the lowermost row value and find the maximum peak in the data. This peak corresponds to the y coordinate location of the eyebrow. A circuit which implements the part 31174 is shown in Fig. 2(o). The principle of this circuit is to locate the position where the $(N+1)^{th}$ data value is less than the $N^{th}$ data value, since this shows that a peak has been encountered. The $(N+1)^{th}$ and $N^{th}$ data values are provided by the REGISTERs, whose outputs are fed to a COMPARATOR which compares the values and outputs a SET signal to an RS flip flop when the $(N+1)^{th}$ data value is less than the $N^{th}$ data value. The RS flip flop is used to issue a load signal to two REGISTERS which store the pixel value and the location at which is occurred. This data represents to y location of the eyebrow, RBy. The RBx location it is assumed to be the same as REx. Hence the location of the brow is now located at (RBx,RBy).

The purpose of the find minimum part 31175 is to find the position of the pupil. This is done by finding the minimum value in the normalised image. The circuit which is used to implement the part 31175 is shown in Fig. 2(p). Since the operation of this circuit is identical to that of the devices 3108 and 3113 it is not explained. The output of this circuit is the coordinate of the right eye pupil, (RPx,RPy).

The part 3118 is similar to device 3117, but differs in that it uses the coordinates of the left eye, (LEx,LEy), to crop the image.

Referring now to Figs. 3(a) and 3(b), the following functions are carried out by the various parts of the post-processor 50 to convert the received facial part position parameters to the facial characteristics.

| Initialisation Parameters | |
|---|---|
| Lip Separation.y | = Mly-Mhy |
| Lip Separation.x | = Mlx-Mhx |
| Average Eye.x | = (LEx + REx)/2 |
| Average Eye.y | = (LEy + REx)/2 |
| Average Pupil.x | = (LPx + RPx)/2 |
| Average Pupil.y | = (LPy + RPy)/2 |
| Offset Eye.x | = Average Eye.x-Average Pupil.x |
| Offset Eye.y | = Average Eye.y-Average Pupil.y |
| Offset Left Brow | = LBy - Average Eye.y |
| Offset Right Brow | = RBy - Average Eye.y |

| Online Parameters | |
|---|---|
| Average Eye.x | = (LEx + REx)/2 |
| Average Eye.y | = (LEy + REx)/2 |
| Average Pupil.x | = (LPx + RPx)/2 |
| Average Pupil.y | = (LPy + RPy)/2 |
| Face Centre.x | = (Slx + Shx)/2 |
| Face Centre.y | = (Sly + Shy)/2 |
| Mouth Centre.x | = (Mlx + Mhx)/2 |
| Mouth Centre.y | = (Mly + Mhy)/2 |
| Mouth Rel.x | = (Face Centre.x - Mouth Centre.x)/BOX WIDTH |
| Mouth Rel.y | = (Mouth Centre.y - Face Centre.y)/BOX HEIGHT |
| Eye Centre.x | = (Face Centre.x - Average Eye.x)/BOX WIDTH |
| Eye Centre.y | = (Face Centre.y - Average Eye.y)/BOX HEIGHT |
| Rotate.z | = (Average Eye.x - Mouth Centre.x)/10 |
| Rotate.y | = CONST1 * Mouth Rel.y |
| Rotate.x | = CONST2 * Mouth Rel.x |
| Left Eye.x | = Right Eye.x = (Average Eye.x - Average Pupil.x - Offset Eye.x) * 10/4 |
| Left Eye.y | = Right Eye.y = (Average Pupil.y - Offset Eye.y)* 10/12 |
| Left Brow | = Left Brow.y - Average Eye.y - Offset Left Brow |

(continued)

| Online Parameters | |
|---|---|
| <u>Right Brow</u> | = Right Brow.y - Average Eye.y - Offset Right Brow |
| <u>Mouth Openness.x</u> | = (Mlx - Mhx - Lip Separation.x)/BOX WIDTH |
| <u>Mouth Openness.y</u> | = (Mly - Mhy - Lip Separation.y)/BOX HEIGHT |

The last nine variables (underlined) which are calculated by use of the online parameters constitute a face vector. The face vector is transmitted from the post-processor 50 for use in the desired application. Because of the comprehensive nature of this signal, it has a wide range of uses.

It will be appreciated that the invention provides an apparatus which is very simple because of the nature and routing of input image data. Further, the output signals are very comprehensive in their content - including location data in terms of regions of pixels rather than edges. This data can additionally be used to provide very useful facial characteristic data signals for down-stream processing. Such processing may include capture of expressions, sign language communication, videophone communication, computer animation or facial substitution in video images both in single frame or real time video acquisition.

**Claims**

1. An image processing method comprising the steps of receiving an input image signal and generating a feature extraction tracking signal, characterised in that :-

   the input image signal is in H,S,V format;

   a facial area location signal (Slx, Sly, Shx, Shy) is generated by passing at least part (H, S) of the input image signal through a band pass filter (3103) and analysing the output of the filter;

   a mouth location signal (Mlx, Mly, Mhx, Mhy) is generated by passing at least part (V, S) of the input image signal through a band pass filter (3102) and analysing the output of the filter within the facial pixel area according to the facial area location signal;

   eye location signals (LEx, LEy, REx, REy) are generated by processing at least part of the input image signal within the facial pixel area according to the facial area location signal; and

   the facial area location, mouth location and eye location signals are outputted as output tracking signals.

2. A method as claimed in claim 1, wherein only two of the H,S,V input image components are used for generation of the facial area location signal.

3. A method as claimed in claim 2, wherein the H and S components are passed through the band pass filter (3103) for generation of the facial area location signal.

4. A method as claimed in any preceding claim wherein only two of the H,S,V input image components are used for generation of the mouth location signal.

5. A method as claimed in claim 4, wherein the S and V components are passed through the band pass filter (3102) for generation of the mouth area location signal.

6. A method as claimed in any preceding claim, wherein the band pass filter output signals are analysed by mapping the output data over the pixel area and generating a projection in a mapping axis and analysing said projection.

7. A method as claimed in claim 6, wherein two projections are generated, one for each axis in a two-dimensional pixel area plane.

8. A method as claimed in any preceding claim, wherein each band pass filter comprises a look-up table (LUT) containing filter indicators which are generated off-line.

9. A method as claimed in any of claims 6 to 8, wherein the step of analysing the filter output signals comprises the further steps of determining maximum limits in the pixel area for a feature and generating a bounding box according to said limits.

10. A method as claimed in any preceding claim, wherein the image processing for generation of the eye area location signals comprises the steps of correlation with templates.

11. A method as claimed in claim 10, wherein the image signal is normalised before correlation.

12. A method as claimed in claims 10 or 11, wherein the V component only of the input image signal is used for generation of the eye location signals.

13. A method as claimed in any preceding claim, wherein the tracking signals which are generated are post-processed to generate a facial characteristic signal representing both location and positional characteristic data, said signal being generated by passing the tracking signals through logic devices.

14. An image processing apparatus comprising :-

means (3101) for receiving an input image signal in H,S,V format;

a facial area band pass filter (3103);

means for passing at least part of the input image signal through the facial area band pass filter and analysing the output of the filter to generate a facial area location signal;

a mouth location band pass filter (3102);

means for passing at least part of the input image signal through the mouth location band pass filter (3102) and (3110-3114) for analysing the output of the filter within the face pixel area according to the facial area location signal;

processing means (3104-3106, 3115-3117) for processing at least part of the input image signal within the facial pixel area according to the facial area location signal to generate eye location signals; and

means for outputting said facial area location, mouth location, and eye location signals as output tracking signals.

15. An apparatus as claimed in claim 14 wherein only the H and S components of the input image signal are passed through the facial area band pass filter (3103).

16. An apparatus as claimed in claims 14 or 15 wherein only the S and V components of the input image signal are passed through the mouth location band pass filter (3102).

17. An apparatus as claimed in any of claims 14 to 16 further comprising post-processing logic devices (50) comprising means for receiving the tracking signals and generating a facial characteristic signal representing both location and positional characteristic data.

**Patentansprüche**

1. Verfahren zur Bildbearbeitung, das die Schritte des Empfangens eines Eingangsbildsignals und der Erzeugung eines Merkmalextraktions-nachführungssignals umfaßt, dadurch gekennzeichnet, daß:

das Eingangsbildsignal im Format H, S, V anliegt;

ein Gesichtsbereich-Lagesignal (Slx, Sly, Shx, Shy) erzeugt wird, indem mindestens ein Teil (H, S) des Eingangsbildsignales durch einen Bandpass-Filter (3103) geführt wird und das Ausgangssignal des Filters analysiert wird;

ein Mundbereich-Lagesignal (Mlx, Mly, Mhx, Mhy) erzeugt wird, indem mindestens ein Teil (V, S) des Eingangsbildsignales durch einen Bandpass-Filter (3102) geführt wird und das Ausgangssignal des Filters innerhalb des Gesichts-Pixelbereiches entsprechend dem Gesichtsbereich-Lagesignal analysiert wird;

Augenbereich-Lagesignale (Lex, Ley, Rex, Rey) erzeugt werden, indem mindestens ein Teil des Eingangsbildsignales innerhalb des Gesichts-Pixelbereiches entsprechend dem Gesichtsbereich-Lagesignal bearbeitet wird; und

die Gesichtsbereich-, Mundbereich- und Augenbereich-Lagesignale als Ausgangsnachführungssignale ausgegeben werden.

2. Verfahren nach Anspruch 1 dadurch gekennzeichnet, daß nur zwei der H, S. V Eingangsbildkomponenten zur Erzeugung des Gesichtsbereich-Lagesignals eingesetzt werden.

3. Verfahren nach Anspruch 2 dadurch gekennzeichnet, daß die H und S Komponenten zur Erzeugung des Gesichtsbereich-Lagesignals durch den Bandpass-Filter (3103) geführt werden.

4. Verfahren nach einem der vorangegangenen Ansprüche, dadurch gekennzeichnet, daß nur zwei der H, S, V Eingangsbildkomponenten zur Erzeugung des Mundbereich-Lagesignals eingesetzt werden.

5. Verfahren nach Anspruch 4, dadurch gekennzeichnet, daß die S und V Komponenten zur Erzeugung des Mundbereich-Lagesignals durch den Bandpass-Filter (3102) geführt werden.

6. Verfahren nach einem der vorangegangenen Ansprüche, dadurch gekennzeichnet, daß die Ausgangssignale des Bandpass-Filters analysiert werden, indem die Ausgangssignaldaten auf den Pixelbereich abgebildet werden und eine Projektion in einer Abbildungsachse erzeugt und die besagte Projektion dann analysiert wird.

7. Verfahren nach Anspruch 6, dadurch gekennzeichnet, daß zwei Projektionen erzeugt werden, je eine für jede Achse in einer zweidimensionalen Pixelbereich-Ebene.

8. Verfahren nach einem der vorangegangenen Ansprüche, dadurch gekennzeichnet, daß ein jeder Bandpass-Filter eine Verweistabelle (look-up table - LUT) umfaßt, die off-line generierte Filterindikatoren enthält.

9. Verfahren nach einem der Ansprüche 6 bis 8, dadurch gekennzeichnet, daß der Schritt der Analyse des Filterausgangssignals die weiteren Schritte der Bestimmung der Höchstgrenzen im Pixelbereich für ein Merkmal und der Erzeugung einer Begrenzungsbox entsprechend den besagten Höchstgrenzen umfaßt.

10. Verfahren nach einem der vorangegangenen Ansprüche, dadurch gekennzeichnet, daß die Bildbearbeitung zur Erzeugung der Augenbereich-Lagesignale die Schritte zur Korrelation mit den Schablonen einschließt.

11. Verfahren nach Anspruch 10, dadurch gekennzeichnet, daß das Bildsignal vor der Korrelation normalisiert wird.

12. Verfahren nach den Ansprüchen 10 oder 11, dadurch gekennzeichnet, daß lediglich die V Komponente des Eingangsbildsignales zur Erzeugung der Augen-Lagesignale eingesetzt wird.

13. Verfahren nach einem der vorangegangenen Ansprüche, dadurch gekennzeichnet. daß die generierten Nachführungssignale so nachbearbeitet werden. daß ein Gesichtskennsignal erzeugt wird, welches sowohl die Lage als auch die Positionskenndaten darstellt, wobei das besagte Signal dadurch generiert wird, daß die Nachführungssignale durch Logikbausteine geführt werden.

14. Bildbearbeitungsgerät bestehend aus

einer Vorrichtung (3101) zum Empfang eines Eingangsbildsignales im H, S. V Format;

einem Gesichtsbereich-Bandpass-Filter (3103);

einer Vorrichtung zur Führung mindestens eines Teiles des Eingangsbildsignales durch den Gesichtsbereich-Bandpass-Filter und Analyse des Filter-Ausgangssignales, um das Gesichtsbereich-Lagesignal zu generieren;

einem Mundbereichslage-Bandpass-Filter (3102);

einer Vorrichtung zur Führung mindestens eines Teiles des Eingangsbildsignales durch den Mundbereichslage-Bandpass-Filter (3102) und (3110-3114) zur Analyse des Filter Ausgangssignals innerhalb des Gesichts-Pixelbereiches entsprechend dem Gesichtsbereich-Lagesignal;

Bearbeitungsvorrichtungen (3104-3106, 3115-3117) zur Bearbeitung mindestens eines Teiles des Eingangsbildsignales innerhalb des Gesichts-Pixelbereiches entsprechend dem Gesichtsbereich-Lagesignal, um Augen-Lagesignale zu generieren; und

Vorrichtungen zur Ausgabe der besagten Gesichtsbereich-Lagesignale. Mundbereich-Lagesignale und Augen-Lagesignale in Form von Ausgangsnachführungssignalen.

15. Gerät nach Anspruch 14, dadurch gekennzeichnet, daß lediglich die H und S Komponenten des Eingangsbildsignales durch den Gesichtsbereich-Bandpass-Filter (3103) geführt werden.

16. Gerät nach den Ansprüchen 14 oder 15, dadurch gekennzeichnet, daß lediglich die S und V Komponenten des Eingangsbildsignales durch den Mundbereich-Bandpass-Filter (3102) geführt werden.

17. Gerät nach einem der Ansprüche 14 bis 16, dadurch gekennzeichnet, daß es außerdem aus Logikbausteinen (50) für die Nachbearbeitung besteht, die Vorrichtungen zum Empfang des Nachführungssignals und zur Erzeugung eines Gesichtskennsignals, welches sowohl die Lage als auch die Positionskenndaten darstellt, enthalten.


**Revendications**

1. Une méthode de traitement d'image constituée des étapes consistant à recevoir un signal d'image d'entrée et à générer un signal de suivi pour l'extraction des traits du visage, caractérisée en ce que :-

le signal d'image d'entrée est en format H, S, V ;

un signal d'emplacement de la zone faciale (Slx, Sly, Shx, Shy) est généré en acheminant une partie au moins (H, S) du signal d'image d'entrée à travers un filtre passe-bande (3103) et en analysant la sortie du filtre ;

un signal d'emplacement de la bouche (Mlx, Mly, Mhx, Mhy) est généré en acheminant une partie au moins (V, S) du signal d'image d'entrée à travers un filtre passe-bande (3102) et en analysant la sortie du filtre dans la zone des pixels faciaux, en fonction du signal d'emplacement de la zone faciale ;

des signaux d'emplacement des yeux (LEx, LEy, REx, REy) sont générés en traitant une partie au moins du signal d'image d'entrée, dans la zone des pixels faciaux, en fonction du signal d'emplacement de la zone faciale ; et

le signal d'emplacement de la zone faciale, le signal d'emplacement de la bouche et le signal d'emplacement des yeux sont présentés en tant que signaux de suivi de sortie.

2. Une méthode, selon la revendication 1, dans laquelle seulement deux des composants H, S, V de l'image d'entrée sont utilisés pour générer le signal d'emplacement de la zone faciale.

3. Une méthode, selon la revendication 2, dans laquelle les composants H et S sont acheminés à travers le filtre passe-bande (3103) afin de générer le signal d'emplacement de la zone faciale.

4. Une méthode, selon l'une quelconque des revendications précédentes, dans laquelle seulement deux des composants H, S, V de l'image d'entrée sont utilisés pour générer le signal d'emplacement de la bouche.

5. Une méthode, selon la revendication 4, dans laquelle les composants S et V sont acheminés à travers le filtre passe-bande (3102) afin de générer le signal d'emplacement de la zone de la bouche.

**6.** Une méthode, selon l'une quelconque des revendications précédentes, dans laquelle les signaux de sortie du filtre passe-bande sont analysés en traçant les données de sortie sur la zone des pixels et en générant une projection selon un axe de traçage et en analysant ladite projection.

**7.** Une méthode, selon la revendication 6, dans laquelle deux projections sont générées, une pour chaque axe se trouvant dans le plan bidimensionnel de la zone des pixels.

**8.** Une méthode, selon l'une quelconque des revendications précédentes, dans laquelle chaque filtre passe-bande comprend une table à consulter (LUT) contenant des indicateurs de filtre qui sont générés en mode autonome.

**9.** Une méthode, selon l'une quelconque des revendications 6 à 8, dans laquelle l'étape de l'analyse des signaux de sortie du filtre, comprend les étapes supplémentaires consistant à déterminer les limites maximales d'un trait du visage dans la zone des pixels, et à générer un parallélépipède englobant conformément auxdites limites.

**10.** Une méthode, selon l'une quelconque des revendications précédentes, dans laquelle le traitement de l'image servant à générer les signaux d'emplacement de la zone des yeux comprend les étapes de corrélation avec des gabarits.

**11.** Une méthode, selon la revendication 10, dans laquelle le signal de l'image est normalisé avant sa corrélation.

**12.** Une méthode, selon la revendication 10 ou 11, dans laquelle le composant V seulement du signal d'image d'entrée sert à générer les signaux d'emplacement des yeux.

**13.** Une méthode, selon l'une quelconque des revendications précédentes, dans laquelle les signaux de suivi qui sont générés font l'objet d'un post-traitement afin de générer un signal de caractéristique faciale représentant à la fois les données caractéristiques de position et d'emplacement, ledit signal étant généré en acheminant les signaux de suivi à travers des dispositifs logiques.

**14.** Un appareil de traitement d'image comprenant :-

un moyen (3101) destiné à recevoir un signal d'image d'entrée sous le format H, S, V ;

un filtre passe-bande de la zone faciale (3103) ;

un moyen permettant d'acheminer une partie au moins du signal d'image d'entrée à travers le filtre passe-bande de la zone faciale et d'analyser la sortie du filtre afin de générer un signal d'emplacement de la zone faciale ;

un filtre passe-bande d'emplacement de la bouche (3102) ;

un moyen permettant d'acheminer une partie au moins du signal d'image d'entrée à travers le filtre passe-bande de l'emplacement de la bouche (3102) et (3110-3114) afin d'analyser la sortie du filtre dans la zone des pixels du visage, en fonction du signal d'emplacement de la zone faciale ;

un moyen de traitement (3104-3106, 3115-3117) destiné à traiter une partie au moins du signal d'image d'entrée dans la zone des pixels du visage, en fonction du signal d'emplacement de la zone faciale, afin de générer les signaux d'emplacement des yeux ; et

un moyen permettant de présenter ledit signal d'emplacement de zone faciale, ledit signal d'emplacement de la bouche et ledit signal d'emplacement des yeux en tant que signaux de suivi de sortie.

**15.** Un appareil, selon la revendication 14, dans laquelle seuls les composants H et S du signal d'entrée d'image sont acheminés à travers le filtre passe-bande de la zone faciale (3103).

**16.** Un appareil, selon la revendication 14 ou 15, dans laquelle seuls les composants S et V du signal d'entrée d'image sont acheminés à travers le filtre passe-bande de l'emplacement de la bouche (3102).

**17.** Un appareil, selon l'une quelconque des revendications 14 à 16, comprenant en outre des dispositifs logiques de

15

post-traitement (50) comprenant un moyen permettant de recevoir les signaux de suivi et de générer un signal de caractéristique faciale représentant à la fois les données caractéristiques de position et d'emplacement.

Fig. 1

Fig. 2(a)

Fig. 2(b)

Fig. 2(c)

18

Fig. 2(d)

3111

EP 0 735 509 B1

Fig. 2(e)

Fig. 2(f)

20

Fig. 2(g)

Fig. 2(h)

Fig. 2(j)

3115

Templates Memory — 31157

31151 — Correlate with Template

I/P PIXEL DATA

31152 — Square Values

31153 — Sum over Template Area

31154 — Template Constant

31155 — Adder

31156 — Subtractor

O/P CORRELATED DATA

Fig. 2(k)

3116

I/P CORRELATION DATA

Frame Sync

Column Addr

8

REGISTER B

REGISTER A

CMP LT

16

16

PIXEL CLK

8

1

MAX POSN

MAX

Fig. 2(i)

3106

MIN VALUE

MAX VALUE

31061 — COUNTER — LOAD, INC

31062 — CONST

31063 — SUBTRACTER

CMP

31064 — SUBTRACTER

31065 — SUBTRACTER

MULT — 31066

DIV — 31067

256x8 LUT — 31068

R/W

MUX — 31069

SELECT

PIXEL DATA

8

8

NORMALIZED PIXEL DATA

22

3117,3118

(LEx,LEy) or (REx,REy)

I/P PIXEL DATA

31171 Crop Picture

31172 X Projection

31173 Smoothing

31174 Find Darkest Point → (RBx, RBy)

31175 Find Minimum → (RPx, RPy)

Fig. 2(l)

31173

I/P X PROJECTED DATA
16

REGISTER — 16 — REGISTER — 16 — REGISTER — 16 — REGISTER — 16

9BIT ADDER — 17

9BIT ADDER — 17

10BIT ADDER

SHIFTER — 16

O/P SMOOTHED DATA

Fig. 2(m)

31172

External Row Addr
8

Select

Multiplexor

Row Addr
8
8

256x16 SRAM

Fig. 2(n)

△ ▽

I/P Pixel Data
16
8

ADDER — 16

X Projection Data

REGISTER

23

31174

I/P X
PROJECTED
AVERAGED
DATA

16

REGISTER

16

REGISTER

16

PIXEL ADDR

COMPARATOR

SET

RESET

RS

REGISTER

16

REGISTER

16

**Fig. 2(o)**

EYEBROW ADDRESS

31175

Column
Addr

8

I/P
CORRELATION
DATA

Frame
Sync

REGISTER

REGISTER

16

16

CMP

GT

8

PIXEL
CLK

**Fig. 2(p)**

1

MAX

MAX POSN

Fig. 3(a)

**Online Parameters**

*50*

Fig. 3(b)